(19) **Europäisches Patentamt**

**European Patent Office**

**Office européen des brevets**

(11) **EP 0 863 408 B1**

(12) **FASCICULE DE BREVET EUROPEEN**

(45) Date de publication et mention
de la délivrance du brevet:
**20.10.2004 Bulletin 2004/43**

(51) Int Cl.⁷: **G01S 13/34**, G01S 7/35

(21) Numéro de dépôt: **98400479.6**

(22) Date de dépôt: **27.02.1998**

(54) **Dispositif de réduction de bruit dans un récepteur radar**

Geräuschreduzierungsvorrichtung für Radarempfänger

Device for noise reduction in a radar receiver

(84) Etats contractants désignés:
**BE DE ES FR GB IT SE**

(30) Priorité: **04.03.1997 FR 9702547**

(43) Date de publication de la demande:
**09.09.1998 Bulletin 1998/37**

(73) Titulaire: **Thales**
**75008 Paris (FR)**

(72) Inventeurs:
• **Kemkemian, Stéphane**
**94117 Arcueil Cedex (FR)**
• **Lacomme, Philippe**
**94117 Arcueil Cedex (FR)**

(56) Documents cités:
**EP-A- 0 185 585      WO-A-95/04943**
**US-A- 5 134 411**

**Description**

La présente invention concerne un dispositif de réduction de bruit dans un récepteur radar. Elle s'applique notamment à des radars équipant des automobiles. Plus généralement, elle s'applique à des radars nécessitant une réalisation à faible coût tout en présentant des performances de bruit élevées.

Il existe plusieurs types d'architecture de circuits de réception de radars. Les récepteurs hétérodynes sont connus pour apporter une grande sensibilité mais sont d'un prix de revient élevé, ce qui est incompatible avec des applications à objectif de coût réduit comme par exemple les radars équipant des voitures automobiles. Dans ce dernier cas, l'objectif de coût réduit est d'autant plus crucial qu'il est envisagé d'équiper de radars des véhicules de moyenne gamme, notamment pour des applications de contrôle et de régulation du trafic routier. De tels radars ont par exemple pour fonction de détecter la distance et la vitesse entre un véhicule porteur et le véhicule le précédant, cela pour permettre au véhicule porteur de régler sa vitesse par rapport au véhicule précédent, pour répondre notamment à des critères de sécurité.

Un récepteur homodyne a l'avantage de pouvoir être produit à faible coût notamment grâce à sa simplicité. Il est donc prévu à ce titre de l'utiliser, notamment pour des applications automobiles. En revanche, il présente une faible sensibilité. En effet, le signal cible est directement transposé en bande de base, c'est-à-dire vers les très basses fréquences, sans amplification notable, voire le plus souvent sans aucune amplification. Or, des composants tels que les mélangeurs ou les amplificateurs vidéofréquence par exemple sont affectés d'un bruit additif coloré important dont la densité spectrale varie selon une loi en $1/F^k$, F représentant une fréquence relative à l'onde porteuse émise.

Un récepteur homodyne est par ailleurs soumis à d'autres types de bruits. Il s'agit par exemple du bruit thermique blanc à large bande provenant de l'antenne, du mélangeur hyperfréquence ou d'amplificateurs insérés entre l'antenne et le mélangeur. Il peut encore s'agir des bruits de phase et d'amplitude du générateur d'onde porté par les cibles ou par les défauts d'isolation des circuits hyperfréquence.

Le but de l'invention est notamment de permettre l'utilisation d'une architecture de récepteur homodyne tout en obtenant une sensibilité comparable à celle que l'on aurait eue en dotant le radar d'un récepteur hétérodyne. A cet effet, l'invention a pour objet un dispositif de réduction de bruit dans un récepteur radar, caractérisé en ce que le bruit à réduire étant en $1/F^k$ et le radar effectuant une codification de l'émission selon au moins deux fréquences, il comporte au moins :

- des moyens d'aiguillage des signaux reçus sur au moins deux voies de telle sorte que, lorsqu'une cible est illuminée par une émission à la première fréquence de code le signal reçu correspondant soit échantillonné et aiguillé sur une première voie puis, lorsque la cible est illuminée par la deuxième fréquence de code le signal reçu correspondant soit échantillonné et aiguillé sur une deuxième voie ;
- des moyens de combinaison linéaire du signal présent sur la première voie et du signal présent sur la deuxième voie, la combinaison linéaire synthétisant un filtrage du bruit.

L'invention a pour principaux avantages qu'elle améliore le rapport signal sur bruit d'un récepteur homodyne, qu'elle est simple à mettre en oeuvre et qu'elle est économique.

D'autres caractéristiques et avantages de l'invention apparaîtront à l'aide de la description qui suit faite en regard de dessins annexés qui représentent :

- la figure 1, le synoptique d'un récepteur radar homodyne ;
- la figure 2, un exemple de bruit coloré en $1/F^k$ ;
- la figure 3, une illustration du principe de fonctionnement d'un dispositif selon l'invention ;
- la figure 4, un exemple de codage en fréquences d'une émission radar ;
- la figure 5, un exemple de réalisation possible d'un dispositif selon l'invention ;
- la figure 6, un exemple de décalage en fréquence d'une fonction de transfert d'un dispositif selon l'invéntion ;
- les figure 7 et 8, d'autres exemples de réalisations possibles d'un dispositif selon l'invention.

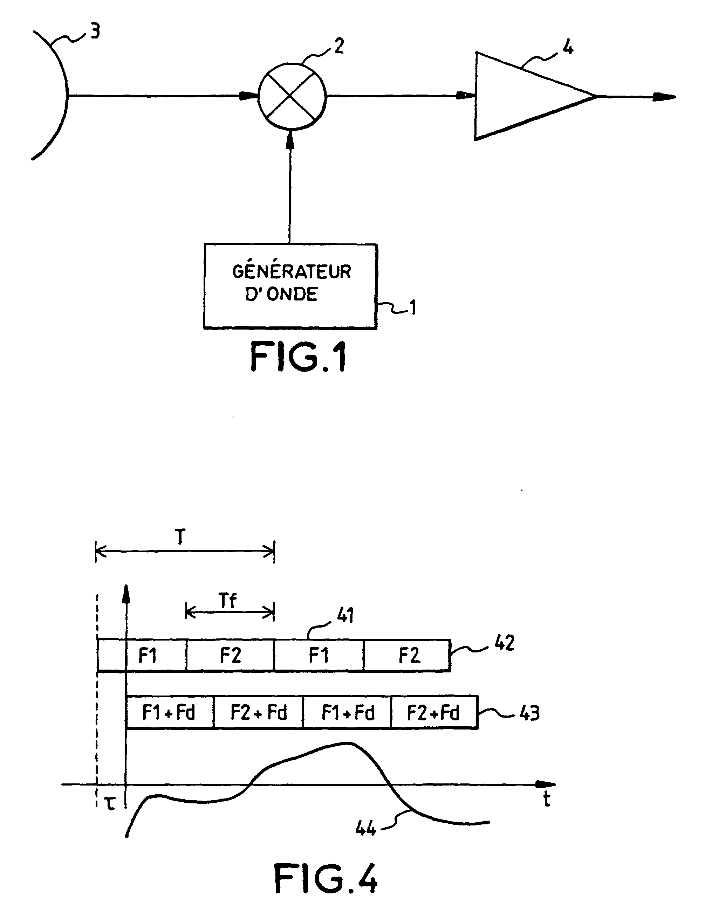

La figure 1 présente le synoptique d'un récepteur radar homodyne. Le même générateur d'onde 1 fournit le signal d'émission et sert d'oscillateur local à la réception. Le signal d'émission peut éventuellement être modulé par des impulsions. Seule la partie utilisée pour la réception est représentée sur la figure 1. La sortie du générateur d'onde 1, faisant ici office d'oscillateur local, est reliée à l'une des deux entrées d'un mélangeur hyperfréquence 2, l'autre entrée de ce dernier recevant le signal d'antenne 3. La sortie du mélangeur 2 est reliée à l'entrée d'un amplificateur vidéofréquence 4 lequel délivre un signal vers un détecteur. Le bruit détecté au niveau du détecteur résulte de la contribution :

- du bruit thermique blanc à large bande additif provenant de l'antenne 3, du mélangeur hyperfréquence 2 et d'un éventuel amplificateur hyperfréquence inséré entre l'antenne 3 et le mélangeur 2 ;

- du bruit de phase et d'amplitude du générateur d'onde 1 porté par le signal reçu des cibles et/ou par les défauts d'isolation des circuits hyperfréquence ;
- du bruit coloré en $1/F^k$ additif provenant du port vidéofréquence du mélangeur et des amplificateurs vidéofréquence placés à sa suite.

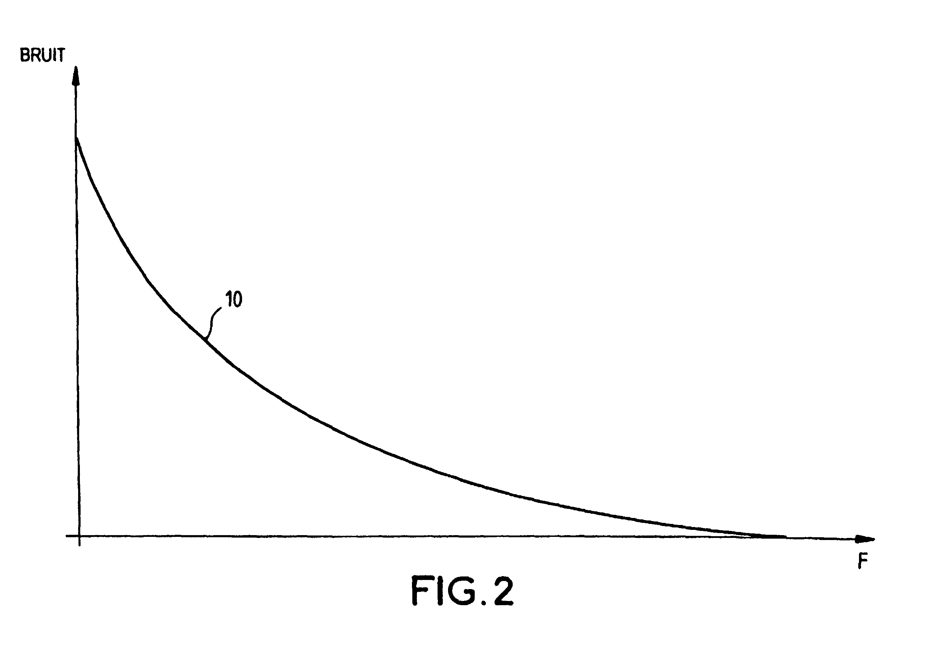

Comme il a été vu précédemment, l'invention a notamment pour but de réduire ce dernier bruit. La figure 2 présente une courbe représentative 10 du bruit coloré suivant une loi en $1/F^k$, l'axe des abscisses représentant les fréquences F et l'axe des ordonnées représentant l'amplitude du bruit. Le bruit représenté est par exemple celui du mélangeur hyperfréquence 2.

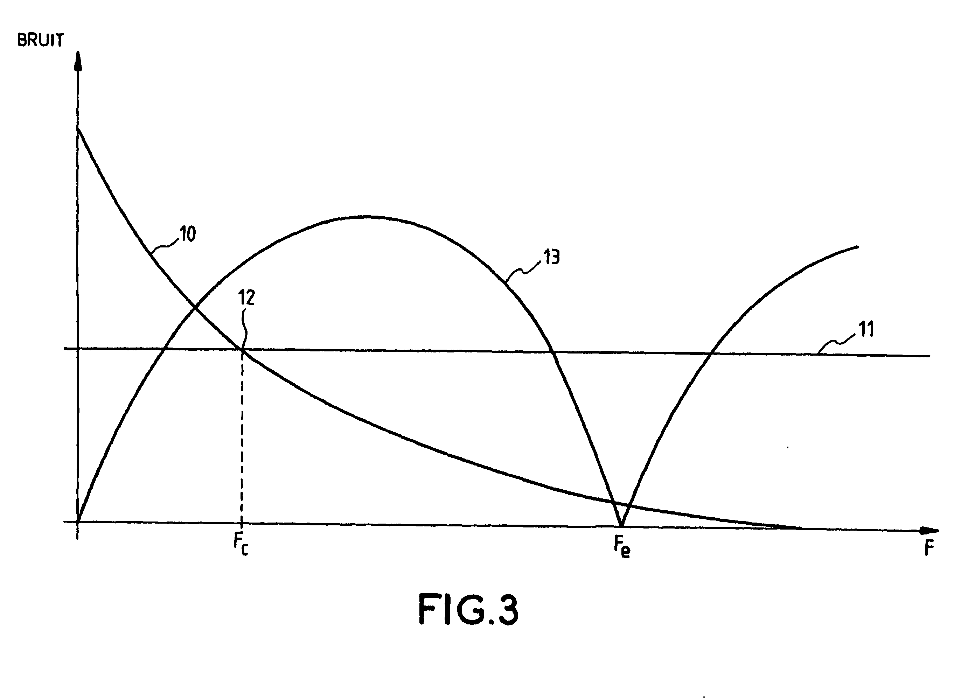

La figure 3 illustre le principe de fonctionnement d'un dispositif selon l'invention. En plus de la courbe 10 représentative du bruit coloré, le bruit thermique est représenté par une droite 11 parallèle à l'axe des fréquences. Ce bruit est le bruit normal en dessous duquel on ne peut pas descendre. Cette droite 11 coupe par exemple la courbe 10 du bruit coloré à une fréquence égale à environ 1 kHz. Au delà de cette fréquence, le bruit coloré passe en dessous du bruit thermique. C'est donc pour des fréquences situées en deçà de la fréquence Fc correspondant au point d'intersection 12 de la courbe et de la droite que le bruit coloré doit être diminué. L'invention utilise le fait que le radar effectue par ailleurs la codification de la fréquence émise selon au moins deux fréquences alternatives pour synthétiser de façon simple et économique un filtrage du bruit coloré. Un exemple de fonction de transfert en amplitude est représentée par une courbe 13 en module de sinus ayant un zéro à la fréquence nulle et un zéro à la fréquence d'échantillonnage Fe des signaux reçus, cette fréquence étant par ailleurs par exemple égale au double de la cadence de commutation Fr de la fréquence émise.

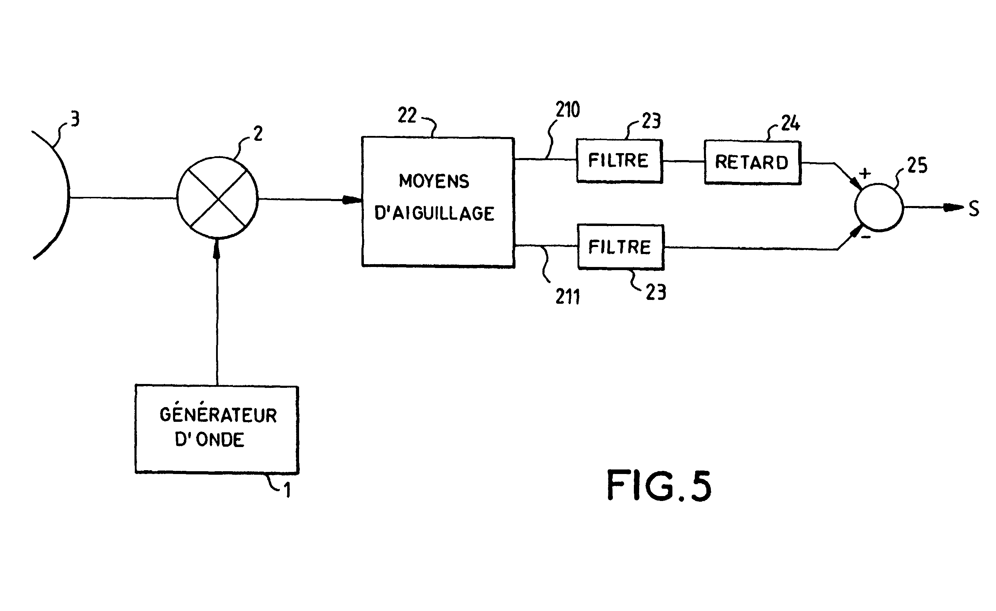

La figure 4 illustre un exemple de codage des signaux émis par le radar dans le cas simple où le nombre d'intervalles de codage 41 est égal à deux. Chaque intervalle de temps 41 est égal à un temps donné Tf. Le codage est tel que le radar émet une séquence 42 comportant successivement un signal à une première fréquence $F_1$ pendant Tf puis un signal à une deuxième fréquence $F_2$ pendant cette même durée Tf et ainsi de suite. La cadence de commutation Fr entre les fréquences émises est donc égale à 1/Tf. La part 43 du signal reçu provenant d'une cible est obtenue en décalant temporellement la séquence émise 42 du délai de propagation aller-retour $\tau=2D/C$ et en transposant sa fréquence instantanée de la fréquence Doppler $F_d = {}^{2Vr}\!/_\lambda$ due au mouvement de la cible, D, C, Vr et $\lambda$ représentant respectivement la distance à la cible, la vitesse de la lumière, la vitesse de la cible et la longueur d'onde du signal émis. Les fréquences émises étant proches les unes des autres, la longueur d'onde $\lambda$ varie peu d'un signal à l'autre et la fréquence Doppler peut être considérée comme étant constante vis-à-vis de la résolution spectrale. Une courbe 44 représente en regard des séquences 42, 43 de signaux émis et reçus, le bruit par exemple du mélangeur hyperfréquence. Ce bruit comporte notamment du bruit thermique blanc à large bande représenté par la droite 11 et le bruit coloré représenté par la courbe 10 et que l'invention a en particulier pour but de réduire.

La figure 5 illustre un exemple de réalisation possible d'un dispositif selon l'invention, avantageusement très simple à mettre en oeuvre et économique. A l'émission, les signaux délivrés par le générateur d'onde 1 sont envoyés vers l'antenne 3 via des circuits d'amplification non représentés. A la réception, les signaux reçus par l'antenne 3 sont dirigés vers le mélangeur 2 par des circuits non représentés. Le mélangeur 2 reçoit d'une part les signaux signés par le code de fréquence et renvoyés par les cibles, et reçoit d'autre part le signal délivré par le générateur d'onde 1 qui opère à la réception comme un oscillateur local. La sortie du mélangeur 2 est reliée à l'entrée de moyens d'aiguillage 22. Ces derniers échantillonnent puis aiguillent les signaux fournis par le mélangeur sur deux voies 210, 211 de telle sorte que, lorsqu'une cible est illuminée par une émission à la première fréquence $F_1$ , le signal reçu correspondant $S_1$ soit échantillonné et aiguillé sur une première voie 210 puis, lorsque la cible est illuminée à la deuxième fréquence $F_2$ , le signal reçu correspondant $S_2$ soit échantillonné et aiguillé sur une deuxième voie 211. Les moyens d'aiguillage 22 comportent par exemple un démultiplexeur connu de l'homme du métier. Ces moyens, notamment les instants d'échantillonnage, sont par exemple synchronisés sur les moyens de codage du signal d'émission, ces derniers n'étant pas représentés. Chaque voie comporte par exemple un filtrage en fréquence particulier 23, par exemple un banc de filtres Doppler, notamment pour détecter la vitesse d'une cible. Au moins une voie 210 comporte par ailleurs un dispositif de type ligne à retard 24 de manière à compenser :

- la non simultanéité des instants de prise en compte des signaux relatifs aux N fréquences du code ;
- les retards différentiels introduits éventuellement par les filtres propres à chaque voie.

Les moyens de retard 24 sont par exemple des dispositifs du type ligne à retard. Les voies 210, 211 sont connectées à des moyens 25 de soustraction. Ces derniers retranchent le signal de l'une au signal de l'autre, par exemple effectuent la soustraction du signal en sortie du filtre 23 de la deuxième voie 211 au signal en sortie des moyens de retard 24 de la première voie 210. Le signal S obtenu en sortie des moyens de soustraction 25 est affecté d'un bruit coloré réduit, ce que montrent les lignes suivantes.

Dans un cas de codage à deux fréquences tel qu'illustré par la figure 4, les moyens d'aiguillage 22 prélevant deux échantillons d'un signal cible après le battement issu du mélangeur 2 :

- le premier $S_1$ dans un intervalle de temps où de signal de fréquence $F_1 + F_d$ bat avec le signal oscillateur local à la première fréquence $F_1$ , la fonction d'oscillateur local étant effectuée par exemple par le générateur d'onde 1 ;
- le second $S_2$ dans un intervalle où le signal de fréquence $F_2 + F_d$ bat avec le signal d'oscillateur local à la deuxième fréquence $F_2$ ;
- ces deux échantillons étant séparés d'une durée Tf, Tf étant la durée d'un intervalle ;
- le signal S en sortie des moyens de soustraction 25 étant donné par la relation suivante :

$$S = S_1 - S_2 \qquad (1);$$

Dans le cas d'un signal rajouté indépendamment du code de fréquence, ce qui est le cas du bruit thermique ou du bruit coloré induit par le mélangeur, la relation (1) constitue un filtre dont la fonction de transfert en fréquence $H(f)$ est donnée par la relation suivante, $f$ étant la variable de fréquence et T la période d'échantillonnage des signaux sur chaque voie, T=2Tf dans un exemple à deux voies :

$$H(f) = -2je^{j(\pi fT)} \sin(\pi fT) \qquad (2)$$

Le module de cette fonction de transfert est alors donné par le module de la fonction $2\sin(\pi fT)$.

La courbe représentative d'une telle fonction de transfert est du type de la courbe 13 de la figure 3, avec un zéro pour une fréquence nulle et un autre zéro pour une fréquence égale à la fréquence d'échantillonnage Fe = 1/T des signaux sur chaque voie 210, 211. Cette dernière est égale dans l'exemple à la moitié de la fréquence de commutation Fr = 2 /T de la fréquence émise, elle est en fait N fois inférieure à la fréquence de commutation s'il y a N fréquences de codage et N voies correspondantes.

Pour un radar équipant par exemple une automobile la fréquence d'échantillonnage Fe, dans le cas d'une codification à deux fréquences, est par exemple de l'ordre de 100 kHz. Comme il a été vu précédemment, le bruit coloré 10 nécessite d'être réduit seulement sur une bande de fréquence comprise entre 0 et une fréquence d'intersection Fc d'environ 1 kHz, et en tout état de cause nettement inférieure à la fréquence d'échantillonnage. Les courbes de bruit coloré 10 de la fonction de transfert H(f) montrent qu'en deçà de la fréquence d'intersection Fc, la fonction de transfert H(t), loin de son maximum, atténue le bruit coloré.

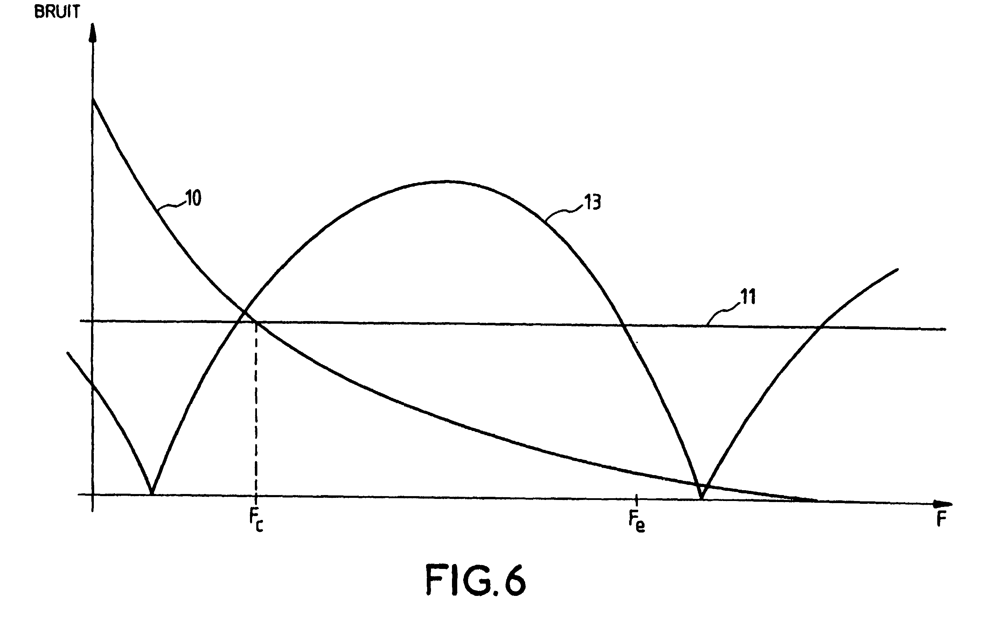

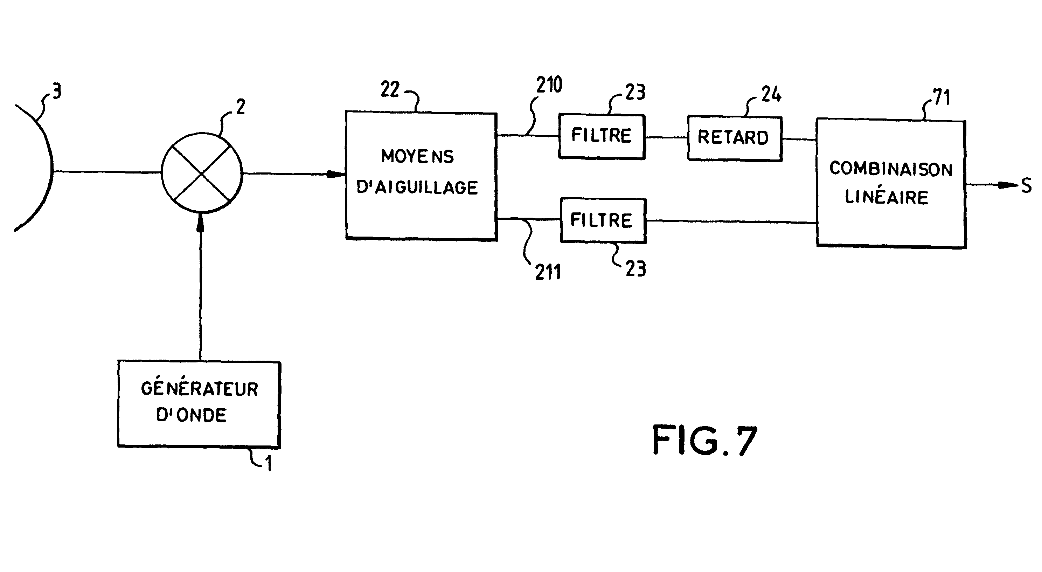

Dans le cas où la fréquence Fc en dessous de laquelle le bruit coloré est significatif n'est pas suffisamment inférieure à la fréquence de d'échantillonnage Fe pour que la fonction de transfert H(f) atténue ce bruit, il est possible de décaler par exemple la courbe de fonction de transfert 13 vers les fréquences croissantes comme l'illustre la figure 6, c'est-à-dire en fait en décalant les zéros de la fonction de transfert du filtre. Pour cela, comme le montre la figure 7 les moyens de soustraction 25 peuvent être remplacés par des moyens de combinaison linéaire 71 qui réalisent la combinaison suivante sur les signaux $S_1$ et $S_2$ des voie 210, 211, S étant le signal de sortie en sortie des moyens de combinaison linéaire 71 :

$$S = S_1 - WS_2 \qquad (4)$$

où W est un nombre complexe, de module égal à 1 et de phase $\Psi$ proche de 0, soit :

$$W = e^{j\Psi} \qquad (5)$$

La fonction de transfert H(f) peut alors s'écrire :

$$H(f) = -2je^{j\left(\frac{\Psi}{2} + \pi fT\right)} \sin\left(\frac{\Psi}{2} + \pi fT\right) \qquad (6)$$

et son module vérifie la relation suivante :

$$\|H(f)\|^2 = 4\sin^2\left(\frac{\Psi}{2} + \pi fT\right) \tag{7}$$

$\frac{\Psi}{2}$ provoquant le décalage en fréquence de la fonction de transfert de $\frac{\Psi}{4\pi T}$.

Cette dernière solution est cependant moins économique que la première car la combinaison linéaire est légèrement plus compliquée à mettre en oeuvre et surtout car elle nécessite un mélangeur de type BLU, c'est-à-dire à bande latérale unique, capable de reconstituer le signal de battement sous son expression complexe. Un tel mélangeur est cher.

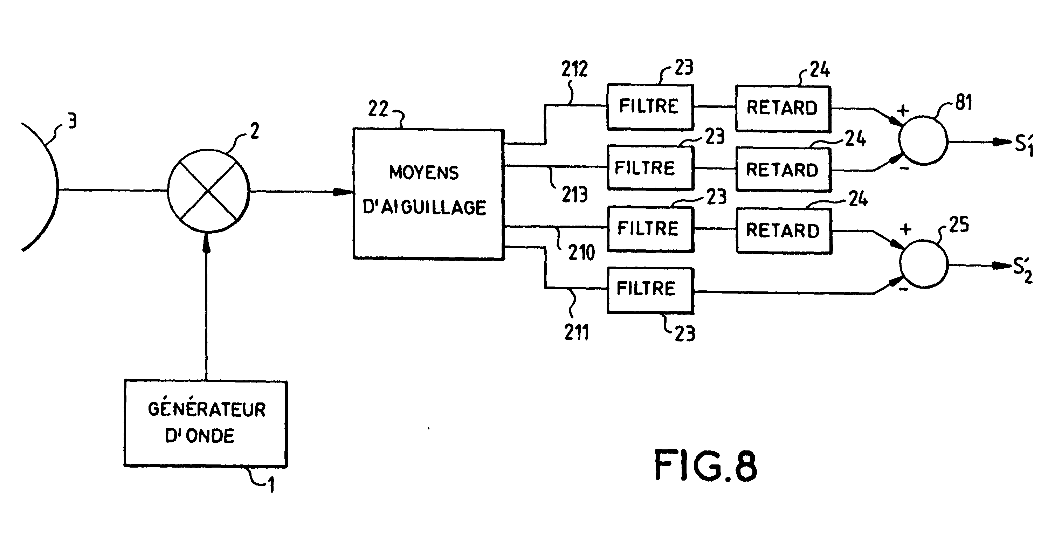

La figure 8 présente un autre mode de réalisation possible d'un dispositif selon l'invention. Dans ce cas l'émission étant codée sur quatre fréquences, le dispositif selon l'invention comporte quatre voies 210, 211, 212, 213 chacune associée à une fréquence de codage. Les voies sont regroupées deux par deux de telle sorte que des premiers moyens de soustraction 25 retranchent le signal de la deuxième voie 211 au signal de la première voie 210 et que des deuxièmes moyens de soustraction 81 retranchent le signal de la quatrième voie 213 au signal de la troisième voie 212. Les signaux S1' et S2' en sortie des moyens de soustraction 25, 81 sont ainsi affranchis du bruit coloré en $1/F^k$ pour être utilisés dans un traitement ultérieur basé sur deux signaux de détection. Il peut être en effet très avantageux que ce traitement opère sur des signaux de détection dénués de bruit coloré. Un tel traitement peut par exemple fournir la distance ou la vitesse des cibles. Chaque voie 210, 211, 212, 213 comporte par exemple un filtrage 23, éventuellement une batterie de filtre Doppler. Toutes les voies sauf une 211 comportent par exemple des moyens de retard 24 de manière à compenser la non simultanéité des instants de prise en compte des signaux relatifs aux quatre fréquences de code et des retards différentiels introduits éventuellement par les filtres propres à chaque voie.

L'invention a été décrite avec des exemples de réalisation basés sur deux ou quatre fréquences de code d'émission. Elle peut cependant être appliquée quelque soit le nombre de fréquences de codes. Toutes les combinaisons linéaires sur les signaux reçus associés synthétisant un filtrage du bruit peuvent être envisagée. Par ailleurs, dans les exemples de réalisation décrits, l'échantillonnage est effectué au niveau des moyens d'aiguillage car en pratique ceux-ci effectuent généralement une telle fonction, il est cependant possible de prévoir un échantillonnage des signaux à un autre endroit du dispositif selon l'invention. En particulier, l'échantillonnage peut être réalisé au niveau des moyens de soustraction.

**Revendications**

1. Dispositif de réduction de bruit dans un récepteur radar, **caractérisé en ce que** le bruit à réduire étant en $1/F^k$ et le radar effectuant une codification de l'émission selon au moins deux fréquences ($F_1$, $F_2$), il comporte au moins :

   - des moyens (22) d'aiguillage des signaux reçus sur au moins deux voies (210, 211) de telle sorte que, lorsqu'une cible est illuminée par une émission à la première fréquence de code ($F_1$) le signal reçu correspondant ($S_1$) soit échantillonné et aiguillé sur une première voie (210) puis, lorsque la cible est illuminée par la deuxième fréquence de code ($F_2$) le signal reçu correspondant ($S_2$) soit échantillonné et aiguillé sur une deuxième voie (211) ;
   - des moyens (25,71) de combinaison linéaire du signal ($S_1$) présent sur la première voie (210) et du signal ($S_2$) présent sur la deuxième voie (211), la combinaison linéaire synthétisant un filtrage du bruit.

2. Dispositif selon la revendication 1, **caractérisé en ce que** les moyens de combinaison linéaire (25) effectuent une soustraction entre le signal ($S_2$) de la deuxième voie (211) et le signal ($S_1$) de la première voie (210).

3. Dispositif selon l'une quelconque des revendications précédentes, **caractérisé en ce que** les moyens d'aiguillage (22) sont reliés à la sortie d'un mélangeur hyperfréquence (2) recevant d'une part les signaux renvoyés par la cible et d'autre part le signal d'oscillateur local.

4. Dispositif selon l'une quelconque des revendications précédentes, **caractérisé en ce que** chaque voie (210,211,212,213) comporte un filtrage en fréquence (23).

5. Dispositif selon la revendication 4, **caractérisé en ce que** chaque voie comporte un banc de filtres Doppler.

**6.** Dispositif selon l'une quelconque des revendications précédentes, **caractérisé en ce que** toutes les voies sauf une comportent des moyens de retard (24).

**7.** Dispositif selon l'une quelconque des revendications précédentes, **caractérisé en ce que** les moyens de combinaison linéaire (25) effectuent une soustraction entre le signal ($S_1$) de la deuxième voie (210) multiplié par une grandeur W et le signal ($S_2$) de la première voie (211), la grandeur W étant un nombre complexe de module égal à 1 et de phase proche de 0.

**8.** Dispositif selon l'une quelconque des revendications précédentes, **caractérisé en ce que** le radar effectuant une codification de l'émission selon quatre fréquences, il comporte quatre voies (210,211,212,213) chacune associée à une fréquence de codage, les voies étant regroupées deux par deux de telle sorte que des premiers moyens de soustraction (25) retranchent le signal de la deuxième voie (211) au signal de la première voie (210) et que des deuxièmes moyens de soustraction (81) retranchent le signal de la quatrième voie (213) au signal de la troisième voie (212).

**9.** Dispositif selon l'une quelconque des revendications précédentes, **caractérisé en ce que** le récepteur est un récepteur homodyne.

## Claims

**1.** Device for the reduction of noise in a radar receiver **characterized in that**, with the noise to be reduced being governed by a $1/F^k$ relationship and with the radar carrying out an encoding of the transmission in at least two frequencies ($F_1$, $F_2$), said device comprises at least:

- means (22) for routing the signals received to at least two channels (210, 211) so that, when a target is illuminated by a transmission at the first code frequency ($F_1$), the corresponding received signal($S_1$) is sampled and routed to a first channel (210) and then, when the target is illuminated by the second frequency ($F_2$), the corresponding received signal ($S_2$) is sampled and routed to a second channel (211);
- means (25, 71) for the linear combination of the signal ($S_1$) present in the first channel (210)and the signal ($S_2$) present in the second channel (211), the linear combination synthesizing a filtering of the noise.

**2.** Device according to Claim 1, **characterized in that** the linear combination means (25) perform a subtraction between the signal ($S_2$) of the second channel (211) and the signal ($S_1$) of the first channel (210).

**3.** Device according to any one of the preceding claims, **characterized in that** the routing means (22) are connected to the output of a microwave mixer (2) receiving, firstly, the signals sent back by the target and, secondly, the local oscillator signal.

**4.** Device according to any one of the preceding claims, **characterized in that** each channel (210, 211, 212, 213) comprises a frequency filtering (23).

**5.** Device according to Claim 4, **characterized in that** each channel comprises a bank of Doppler filters.

**6.** Device according to any one of the preceding claims, **characterized in that** all the channels except one comprise delay means (24).

**7.** Device according to any one of the preceding claims, **characterized in that** the linear combination means (25) carry out a subtraction between the signal ($S_1$) of the second channel (210) multiplied by a value W and the signal ($S_2$) of the first channel (211), the value W being a complex number with modulus equal to 1 and phase close to 0.

**8.** Device according to any one of the preceding claims, **characterized in that** the radar, performing an encoding of the transmission in four frequencies, comprises four channels (210, 211, 212, 213) each associated with an encoding frequency, the channels being grouped two by two in such a way that first subtraction means (25) deduct the signal of the second channel (211) from the signal of the first channel (210) and second subtraction means (81) decuct the signal of the fourth channel (213) from the signal of the third channel (212).

**9.** Device according to any one of the preceding claims, **characterized in that** the receiver is a homodyne receiver.

**Patentansprüche**

1. Vorrichtung zur Rauschreduzierung in einem Radarempfänger, **dadurch gekennzeichnet, dass** sie, wenn das zu reduzierende Rauschen in $1/F^k$ vorliegt und das Radargerät eine Codierung des Sendesignals gemäß mindestens zwei Frequenzen ($F_1$, $F_2$) durchführt, mindestens Folgendes aufweist:

   - Mittel (22), um die auf mindestens zwei Kanälen (210, 211) empfangenen Signale derart zu lenken, dass, wenn ein Zielobjekt von einem Sendesignal mit der ersten Codefrequenz ($F_1$) getroffen wird, das entsprechende empfangene Signal ($S_1$) getastet und auf einen ersten Kanal (210) gelenkt wird, und dass, wenn das Zielobjekt von der zweiten Codefrequenz ($F_2$) getroffen wird, das entsprechende empfangene Signal ($S_2$) getastet und auf einen zweiten Kanal (211) gelenkt wird;
   - Mittel (25, 71) zur linearen Kombination des auf dem ersten Kanal (211) vorhandenen Signals ($S_2$) und des auf dem zweiten Kanal (210) vorhandenen Signals ($S_1$), wobei die lineare Kombination eine Filterung des Rauschens synthetisiert.

2. Vorrichtung nach Anspruch 1, **dadurch gekennzeichnet, dass** die Mittel (25) zur linearen Kombination eine Subtraktion zwischen dem Signal ($S_2$) des zweiten Kanals (211) und dem Signal ($S_1$) des ersten Kanals (210) durchführen.

3. Vorrichtung nach einem der vorhergehenden Ansprüche, **dadurch gekennzeichnet, dass** die Lenkmittel (22) mit dem Ausgang einer Mikrowellenmischstufe (2) verbunden sind, die einerseits die vom Zielobjekt reflektierten Signale und andererseits das Signal des lokalen Oszillators empfängt.

4. Vorrichtung nach einem der vorhergehenden Ansprüche, **dadurch gekennzeichnet, dass** jeder Kanal (210, 211, 212, 213) eine Frequenzfilterung (23) aufweist.

5. Vorrichtung nach Anspruch 4, **dadurch gekennzeichnet, dass** jeder Kanal eine Dopplerfilterbank aufweist.

6. Vorrichtung nach einem der vorhergehenden Ansprüche, **dadurch gekennzeichnet, dass** bis auf einen alle Kanäle Verzögerungsmittel (24) aufweisen.

7. Vorrichtung nach einem der vorhergehenden Ansprüche, **dadurch gekennzeichnet, dass** die Mittel (25) zur linearen Kombination eine Subtraktion zwischen dem Signal ($S_1$) des zweiten Kanals (210), multipliziert mit einer Größe W, und dem Signal ($S_2$) des ersten Kanals (211) durchführen, wobei die Größe W eine komplexe Zahl mit einem Modulwert gleich 1 und einer Phase nahe 0 ist.

8. Vorrichtung nach einem der vorhergehenden Ansprüche, **dadurch gekennzeichnet, dass** das Radargerät eine Codierung des Sendens gemäß vier Frequenzen durchführt und hierzu vier Kanäle (210, 211, 212, 213) aufweist, die je einer Codierfrequenz zugeordnet sind, wobei die Kanäle paarweise so zusammengefasst sind, dass erste Subtrahiermittel (25) das Signal des zweiten Kanals (211) vom Signal des ersten Kanals (210) abziehen, und dass zweite Subtrahiermittel (81) das Signal des vierten Kanals (213) vom Signal des dritten Kanals (212) abziehen.

9. Vorrichtung nach einem der vorhergehenden Ansprüche, **dadurch gekennzeichnet, dass** der Empfänger ein Homodynempfänger ist.

**FIG.1**

**FIG.4**

BRUIT

10

F

FIG.2

FIG.3

EP 0 863 408 B1

FIG.5

FIG.6

EP 0 863 408 B1

S

COMBINAISON
LINÉAIRE
71

RETARD
24

FILTRE
23

FILTRE
23

210

211

MOYENS
D'AIGUILLAGE
22

2

GÉNÉRATEUR
D'ONDE
1

3

# FIG.7

FIG.8